# EUROPEAN PATENT SPECIFICATION

(11) **EP 4 015 365 B1**
(45) Date of publication and mention of the grant of the patent: **18.02.2026**
(21) Application number: 21215617.8
(22) Date of filing: 17.12.2021
(51) Int. Cl.: B64D 27/34, B64D 31/16, B64C 29/00

(54) **AIRCRAFT ROTOR ASSEMBLY WITH PLURAL ROTORS**
FLUGZEUGROTORANORDNUNG MIT MEHREREN ROTOREN
ENSEMBLE ROTOR D'AÉRONEF AVEC PLUSIEURS ROTORS

(30) Priority: 17.12.2020 US 202063126747 P; 08.12.2021 US 202117643221
(43) Date of publication of application: 22.06.2022
(73) Proprietor: Aurora Flight Sciences Corporation, a subsidiary of The Boeing Company, Manassas VA 20110 (US)
(72) Inventor: THOMAS, Jason Hunter, Manassas, 20110 (US); BUTT, Lauren Marie, Manassas, 20110 (US); STARUK, William Joseph, Manassas, 20110 (US)
(74) Representative: Morrall, Jonathan Ian McLachlan

(56) References cited:
- WO-A1-2019/232535
- US-A1- 2017 274 983
- US-A1- 2019 092 461
- US-A1- 2019 135 425
- US-B1- 10 494 088

## Description

### BACKGROUND

This disclosure relates generally to aircraft and aircraft componentry, and more particularly to a rotor assembly for an aircraft.

A drone aircraft may be configured for vertical takeoff-and-landing (VTOL), enabling it to operate without a runway. Such an aircraft may include one or more rotor assemblies that provide lift during takeoff and landing. Naturally, it is desirable for an aircraft rotor assembly to operate with high efficiency. In many scenarios, it is further desirable for a rotor assembly to operate with minimal vibration and/or acoustic emission.

US10494088B1, in accordance with its abstract, states aerial vehicles may be equipped with propellers having pivotable blades that are configured to rotate when the propellers are not rotating under power. A pivotable blade may rotate about an axis of a propeller with respect to a hub until the pivotable blade is coaligned with a fixed blade. When the propeller is rotating a lifting force from the blade may cause the blade to rotate to a deployed position that is not coaligned with the fixed blade.

US2019092461A1, in accordance with its abstract, states a rotor assembly for a fixed-wing VTOL aircraft. The rotor assembly is configured to provide vertical flight for the fixed-wing VTOL aircraft. In one embodiment, the rotor assembly includes a hub assembly, a first rotor blade affixed to the hub assembly, and a second rotor blade affixed to the hub assembly. The hub assembly orients the second rotor blade in relation to the first rotor blade about an axis of rotation of the hub assembly with the first rotor blade and the second rotor blade vertically stacked when the hub assembly is stopped for wing-borne flight.

US2019135425A1, in accordance with its abstract, states a vertical landing and takeoff aircraft VTOL transitions from a vertical takeoff state to a cruise state where the vertical takeoff state uses propellers to generate lift and the cruise state uses wings to generate lift. The aircraft has an M-wing configuration with propellers located on the wingtip nacelles, wing booms, and tail boom. The wing boom and/or the tail boom can include boom control effectors. Hinged control surfaces on the wings, tail boom, and tail tilt during takeoff and landing to yaw the vehicle. The boom control effectors, cruise propellers, stacked propellers, and control surfaces can have different positions during different modes of operation in order to control aircraft movement and mitigate noise generated by the aircraft.

WO2019232535A1, in accordance with its abstract, states a system and method for reducing a psychoacoustic penalty of acoustic noise emitted by an aircraft, including a plurality of propulsion assemblies coupled to the aircraft, wherein each of the plurality of propulsion assemblies includes a motor, and a plurality of blades defined by a propeller, wherein the plurality of blades can define an asymmetric blade spacing; a control subsystem coupled to the aircraft and communicatively coupled to the motor of each of the plurality of propulsion assemblies, wherein the control subsystem is operable to rotate each of the plurality of propulsion assemblies at a different frequency to modulate the acoustic power distribution of the emitted acoustic signature.

US2017274983A1, in accordance with its abstract, states sounds are generated by an aerial vehicle during operation. For example, the motors and propellers of an aerial vehicle generate sounds during operation. Disclosed are systems, methods, and apparatus for actively adjusting the position and/or configuration of one or more propeller blades of a propulsion mechanism to generate different sounds and/or lifting forces from the propulsion mechanism.

### SUMMARY

In a first aspect, a rotor assembly is provided according to claim 1. Optional features are set out in dependent claims 2 to 10.

In a second aspect, an aircraft is provided according to claim 11**.**

Optional features are set out in dependent claims 12 and 13.

This Summary is not intended to identify key features or essential features of the claimed subject matter. Neither is the scope of the claimed subject matter limited to implementations that address any problems or disadvantages that may be noted in any part of this disclosure. The features, functions, and advantages described in this disclosure may be achieved independently in some implementations and may be combined in other implementations, insofar as they fall within the scope of the appended claims.

### BRIEF DESCRIPTION OF THE DRAWINGS

This disclosure will be better understood from reading the following Detailed Description with reference to the attached drawing figures, wherein:
FIG. 1 shows aspects of an example aircraft;
FIG. 2 shows aspects of an example rotor assembly of an aircraft;
FIG. 3 shows a pair of fixed-pitch blades of an example rotor of a rotor assembly;
FIGS. 4 and 5 show the example rotor assembly of FIG. 2 with the rotors separated by different values of the differential phase angle;
FIG. 6 is a cross-sectional view of the example rotor assembly of FIGS. 2, 4, and 5;
FIG. 7 is a schematic block diagram of selected components of the aircraft of FIG. 1;
FIG. 8 shows aspects of a mechanical interlock of the example rotor assembly of FIGS. 2, 4, 5, and 6;
FIG. 9 shows aspects of an example method to control an aircraft rotor assembly having plural, coaxial rotors and a drive assembly configured to vary the differential phase angle between the rotors;
FIG. 10 shows an example graph of differential phase angle as a function of relative wind velocity;
FIG. 11 illustrates the issue of ingestion of the vortex of an upstream rotor by a downstream rotor; and
FIG. 12 shows aspects of an example onboard computer of an aircraft.

### DETAILED DESCRIPTION

As noted above, this disclosure relates to a rotor assembly for an aircraft. One objective for the rotor assembly is to minimize the aerodynamic drag on the rotor blades of the rotor assembly in the powered-down state-e.g., during cruising flight. It is a further benefit to achieve this objective in a way that does not limit the number of rotor blades that may be arranged in the rotor assembly, as each additional rotor blade provides additional thrust at a given rotational velocity. Other objectives include reducing the amount of vibration and/or acoustic noise produced by the rotor assembly during various modes of operation (e.g., takeoff, landing, cruising flight).

To satisfy the above objectives, the rotor assemblies herein include plural, coaxial rotors with blades that are set apart by 180 degrees. The differential phase angle separating the blades of different rotors is adjustable, however. That angle can be expanded to provide maximum thrust for vertical takeoff and landing and reduced to zero during cruising flight, where every blade may be aligned to the flow direction of the surrounding air mass, in order to reduce drag.

The features introduced above will now be described by way of example and with reference to the attached drawing figures. Components, process steps, and other elements that may be substantially the same in one or more of the figures are identified coordinately and are described with minimal repetition. It will be noted, however, that elements identified coordinately may also differ to some degree. It will be further noted that the figures are schematic and generally not drawn to scale. Rather, the various drawing scales, aspect ratios, and numbers of components shown in the figures may be purposely distorted to make certain features or relationships easier to see.

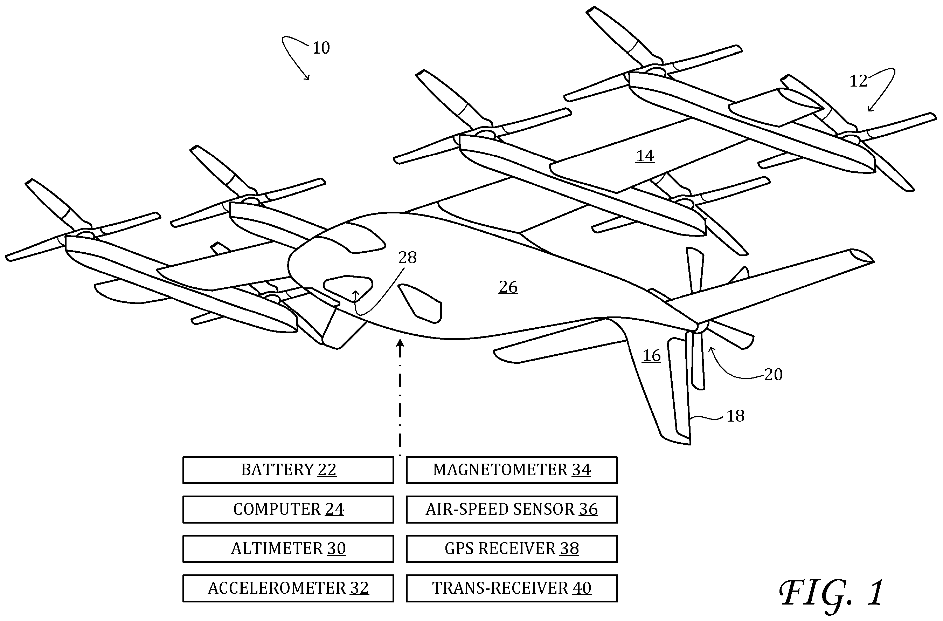

FIG. 1 shows aspects of an example aircraft 10 configured for vertical takeoff and landing (VTOL). To that end, the aircraft includes a plurality of rotor assemblies 12, which provide substantially vertical (i.e., upward) thrust. To enable cruising (i.e., forward) flight between takeoff and landing, the aircraft includes a fixed wing 14, a tail section 16, various control surfaces (e.g., rudder 18), and at least one forward thruster 20. In some examples, rotor assemblies 12 and forward thruster 20 may have a fixed orientation relative to each other. In some examples, rotor assemblies 12 and forward thruster 20 may be electrically powered. Aircraft 10 includes, therefore, a battery 22 configured to store and supply electrical power to the aircraft. In some examples, the battery is the primary source of power for the aircraft. In other examples, the aircraft may include an engine coupled to an electrical generator, which supplies power to the battery.

Aircraft 10 includes an on-board computer 24. The computer may be arranged in fuselage 26 of the aircraft, together with the sensory and communications componentry described below. The computer is configured to receive electronic input signal from a plurality of aircraft sensors. Such sensors may include camera 28, altimeter 30, accelerometer 32, magnetometer 34, air-speed sensor 36, and global-positioning system (GPS) receiver 38, among others. The computer is configured to output electronic control signal to a plurality of electronically controlled aircraft components. Such components may include, among others, electromechanical actuators for flight-control surfaces and electronic motor controllers *(vide infra)* associated with rotor assemblies 12 and forward thruster 20. In a typical flight-control strategy, computer 24 computes a desired setpoint for every control variable based on pilot input and/or sensory signal. The actual values of the control variables are iteratively or continuously sensed and the aircraft componentry actuated in a closed-loop manner so as to urge the sensed values toward their respective setpoints. In some variants, computer 24 outputs the setpoints to downstream actuator components that enforce the control loop. In other variants, the control loop is enforced by the computer itself.

Aircraft 10 includes a transmitter-receiver 40 coupled operatively to computer 24. The transmitter-receiver may include a two-way radio of any suitable technology. The transmitter-receiver may be configured to enable remote piloting and transmission of video feed from camera 28 to a remote location. Leveraging that feature, aircraft 10 may take the form of a remotely piloted drone suitable for surveillance, parcel delivery, and various other military and civilian applications. Aircraft similarly configured but implemented on a larger scale may be suitable for transporting passengers and/or heavier cargo. Irrespective of the use scenario or scale of implementation, rotor assemblies 12 enable aircraft 10 to take off and land without need of a runway.

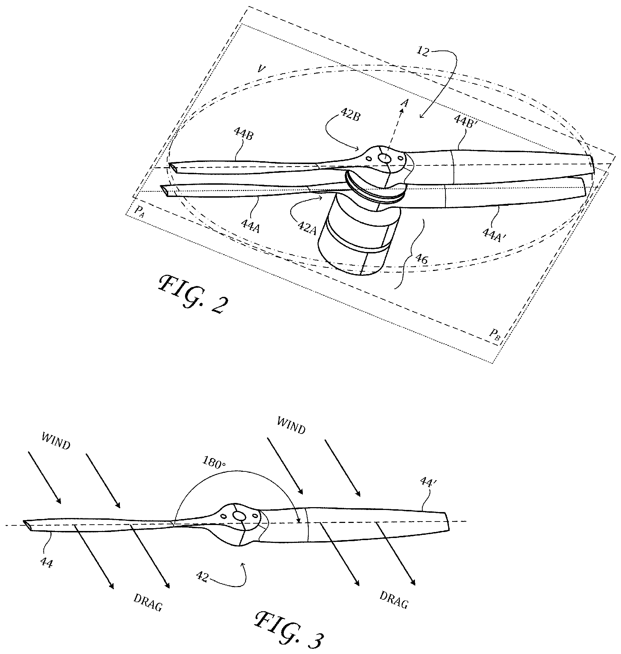

FIG. 2 shows aspects of an example rotor assembly 12 of aircraft 10. Rotor assembly 12 includes a plurality of rotors 42-two rotors, 42A and 42B, in the illustrated example. Each rotor includes, as shown also in FIG. 3, a pair of fixed-pitch blades, 44 and 44', fixedly separated 180 degrees with respect to each other. The widely available and optimized blade configuration of FIG. 3 is amenable to the manufacture of relatively low-cost aircraft rotors. Nevertheless, this configuration poses certain problems for a VTOL aircraft configured also for cruising flight. The blades, unless concealed from lateral airflow or statically aligned to the wind direction, may produce excessive drag, turbulence, and noise during high-speed cruising. Moreover, the tactic of statically aligning the blades to the wind direction while cruising is only possible when there are at most two blades per rotor. Additional blades are desirable, however, in order to increase the amount of thrust available at a given rotational speed. The configurations described herein address these issues and provide additional advantages.

Returning now to FIG. 2, rotor assembly 12 includes a first rotor 42A and a second rotor 42B, each rotatable about a common axis A. First rotor 42A has a first pair of blades, 44A and 44A', extending radially and in opposite directions from axis A. Likewise, second rotor 42B has a second pair of blades, 44B and 44B', extending radially and in opposite directions from axis A. First blade 44A is separated from third blade 44A' by 180 degrees, and second blade 44B is separated from fourth blade 44B' by 180 degrees. The second pair of blades is longitudinally offset from the first pair of blades along axis A, such that the second pair of blades rotates outside the volume of rotation V swept out by the first pair of blades. In other words, the rotational plane *P_{A}* in which the first pair of blades rotate is parallel to and offset from the rotational plane *P_{B}* in which the second pair of blades rotate. In the illustrated example, each blade is a non-folding, fixed-pitch blade, and all of the blades are equal in length. In other examples, the length of the second pair of blades may differ from the length of the first pair of blades.

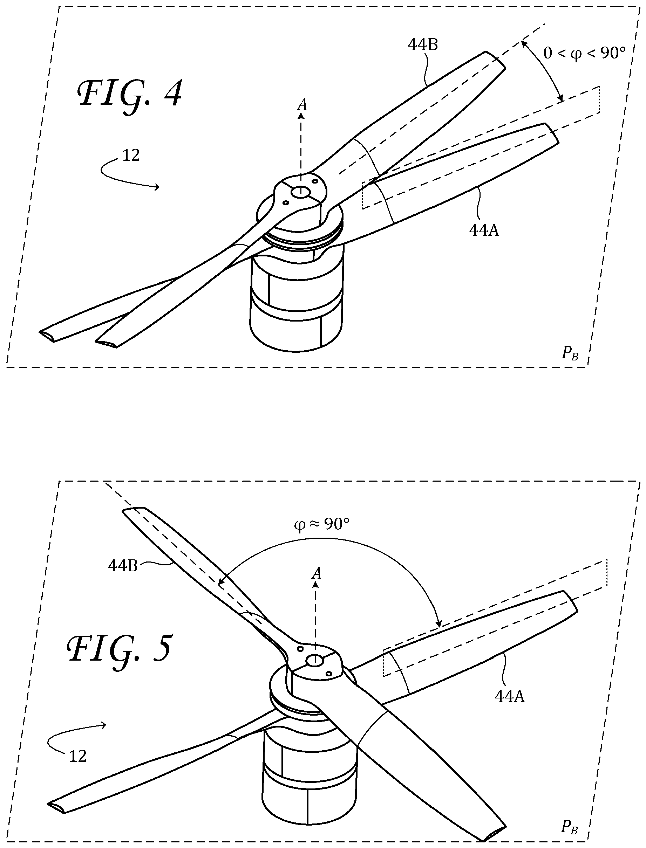

Rotor assembly 12 includes a drive assembly 46 coupled to first rotor 42A and to second rotor 42B. The drive assembly is configured to support, depending on conditions, both synchronous and differential rotation of the first and second rotors about axis *A.* In particular, the first and second rotors of rotor assembly 12 are rotatable synchronously for combined thrust during takeoff and landing. The first and second rotors are also rotatable with respect to each other, enabling dynamic adjustment of the phase lag between rotors and static alignment of the rotor blades for cruising flight. More specifically, and with reference now to FIGS. 4 and 5, the drive assembly is configured to controllably vary the differential phase angle *φ* separating first blade 44A and second blade 44B as projected onto any plane perpendicular to axis *A*. The drive assembly may be configured to controllably vary the differential phase angle during continuous rotation of the first and second rotors, for instance. This and other modes of blade-angle adjustment are described in greater detail below.

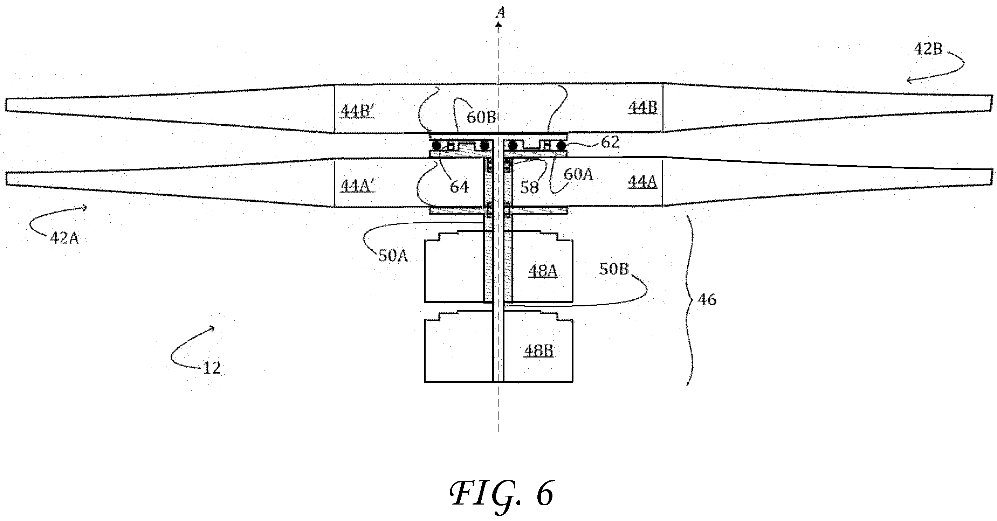

Turning now to FIG. 6, drive assembly 46 includes a first motor 48A, which is coupled to first rotor 42A via first shaft 50A. The drive assembly also includes a second motor 48B, which is coupled to second rotor 42B via second shaft 50B. In this and other examples, the first and second shafts are concentric and aligned each to axis *A.* In the illustrated example, the first and second motors are adjacent along axis A, such that the first and second pairs of blades are arranged at one side of rotor assembly 12, and the first and second motors are arranged at an opposite side of the rotor assembly. To accommodate that configuration, first shaft 50A passes coaxially through a cylindrical bore in second shaft 50B. In other configurations, the blades of first rotor 42A may be arranged at one end of rotor assembly 12, the blades of second rotor 42B may be arranged at the opposite end of rotor assembly 12, and both the first and second motors may be arranged centrally, between the rotation planes of the two rotors.

Various types of electric motors may be used in drive assembly 46, provided that certain conditions are met. One condition is that the motors are capable of substantially synchronous operation, such that the afore-mentioned differential phase angle *φ* is controllable to a desired accuracy. To that end, the differential phase angle may be iteratively or continuously sensed, typically via independent sensing of the absolute rotation angles of each rotor (*α* for first rotor 42A, *β* for second rotor 42B) and evaluation of the difference *φ = α - β*. In other examples, the difference itself may be sensed directly.

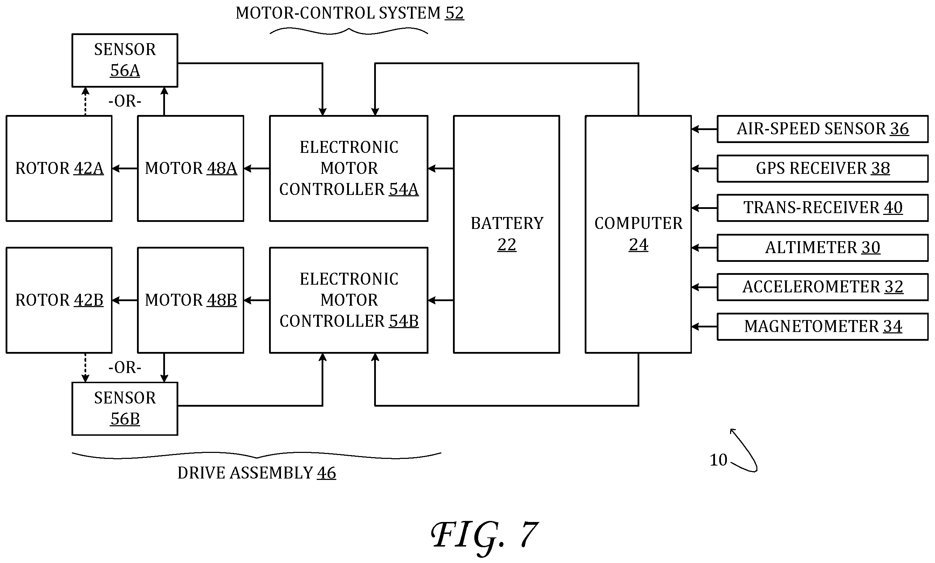

Turning now to FIG. 7, drive assembly 46 may include a motor-control system 52, comprised of at least one electronic motor controller 54, which mediates power delivery to first motor 48A and second motor 48B. In examples in which two or more electronic motor controllers are arranged in the motor-control system, the individual controllers may by interlinked (via any suitable protocol) to enable synchronization of the absolute rotation angles. In some examples, at least a portion of the motor-control strategy may be achieved in software. Rotor assembly 12 includes one or more rotation angle sensors 56 *(e.g.,* 56A, 56B) configured to sense either (according to examples not forming part of the presently claimed invention) a rotation angle of the first and second motors or (according to the presently claimed invention) of the first and second rotors. A rotation angle sensor may be called an 'encoding position resolver' in some contexts. Each electronic motor controller of the motor-control system is configured to receive feedback signal from the one or more rotation angle sensors. The electronic motor controllers use the feedback signal to regulate the magnitude and phase of the electric power delivered to the motors. This feature enables accurate control of the rotational velocity of the associated rotors and of the differential phase angle *φ.*

According to the presently claimed invention, an absolute rotation angle is sensed for a given rotor, and an electronic motor controller is configured to station that rotor within a desired angular interval. Stationing is achieved via closed-loop control of the absolute rotation angle, by applying impulses of forward and reverse torque iteratively so as to maintain the absolute rotation angle within the desired angular interval (e.g., stationed at rest within the desired angular interval).

In some examples, rotation angle sensors 56 may be distinct from first motor 48A or second motor 48B. The rotation angle sensors may be optoelectronic, Hall-effect, acoustic, *etc.* The rotation angle sensors may be arranged at any suitable position on drive assembly 46. In other examples, the rotation angle sensors 56 may be integrated within first motor 48A and second motor 48B. By way of example, brushless DC motors and synchronous AC motors both provide output waveforms that, when received as input to a suitable electronic motor controller, reveal the absolute rotation angle of the rotor. Accordingly, an integrated rotation angle sensor 56 may take the form of an internal motor winding or Hall-effect sensor of a motor in some examples.

Returning now to FIG. 6, rotor assembly 12 includes additional componentry configured to marshal torque transmission from motors 48 to rotors 42 and to achieve other advantages. In the illustrated example, the rotor assembly includes four pairs of shaft bearings 58 arranged between first shaft 50A and second shaft 50B. The rotor assembly also includes a pair of opposing hub disks-first hub disk 60A, fixedly coupled to first rotor 42A, and a second hub disk 60B fixedly coupled to second rotor 42B. One or more additional bearing races 62 are arranged between the hub disks, enabling the hub disks to rotate relative to each other and to exchange normal loads. In the illustrated example, a pair of pinion gears 64 are also arranged between the hub disks.

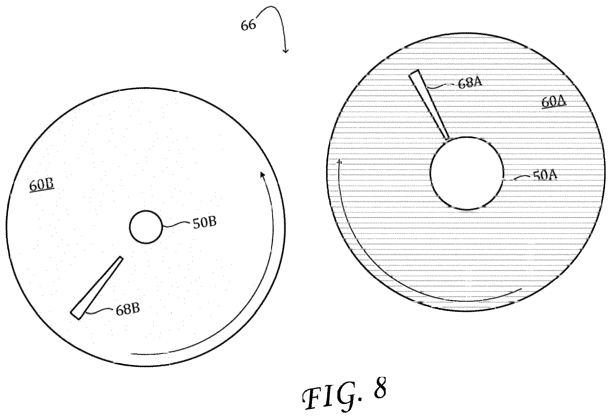

Turning now to FIG. 8, rotor assembly 12 includes a mechanical interlock 66 formed on the opposing hub disks 60A and 60B. The mechanical interlock is configured to couple first motor 48A to second rotor 42B (or second motor 48B to first rotor 42A) when the differential phase angle reaches a predetermined value. In this manner, the mechanical interlock limits the differential phase angle and allows the first motor to rotate the second rotor (or *vice versa)* if either motor should fail. In the illustrated example, interlock 66 comprises a pair of raised wedges formed on or otherwise attached to the opposing hub disks-wedge 68A on first hub disk 60A and wedge 68B on second hub disk 60B. The wedges are raised by a sufficient amount as to prevent one wedge from rotating past the other. Accordingly, when the differential phase angle increases to about 360 degrees, the first hub disk will meet and rotate the second hub disk. Conversely, when the differential phase angle decreases to about -360 degrees, the second hub disk will meet and rotate the first hub disk. In other examples, the mechanical interlock may take a different form. In other examples the mechanical interlock may be arranged on shafts 50 or elsewhere in rotor assembly 12.

No aspect of the drawings or description herein should be understood in a limiting sense, as numerous variations, extensions, and omissions are also envisaged. While illustrated rotor assembly 12 includes two rotors and a corresponding number of motors, other suitable rotor assemblies may include three or more rotors, each coupled to a corresponding motor of the drive assembly. Alternatively, a given motor of the drive assembly may be configured to drive either plural rotors or a single rotor with blades arranged at each end of its associated shaft. Various advantages of the rotor assemblies herein are exemplified in the lift-providing orientation, but that orientation is not strictly necessary, as such rotor assemblies may be used in other orientations as well, to secure other advantages.

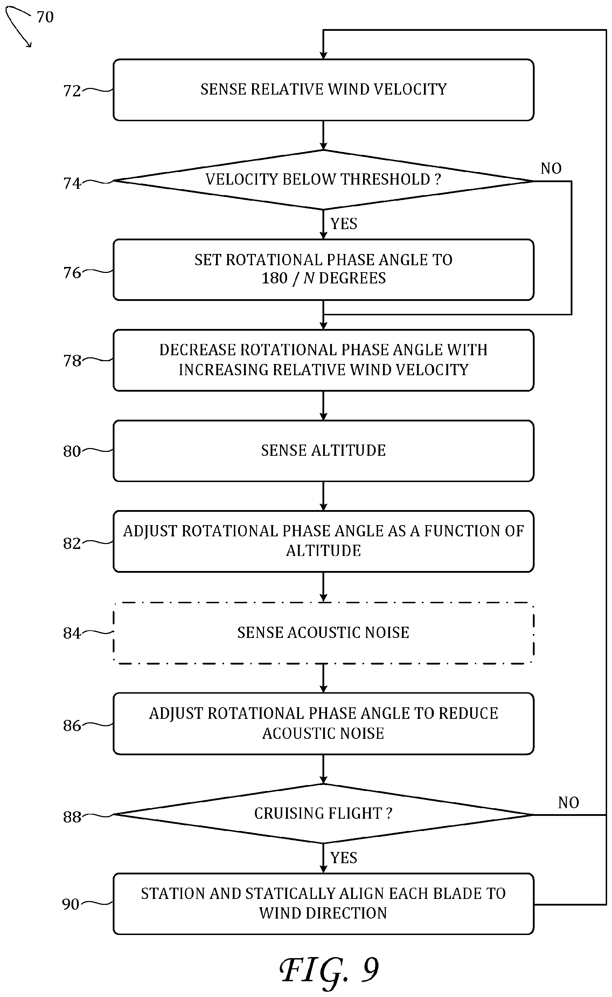

FIG. 9 shows aspects of an example method 70 to control an aircraft rotor assembly having plural, coaxial rotors and a drive assembly configured to vary the differential phase angle between the rotors. Method 70 may be orchestrated by an onboard computer of the aircraft in which the rotor assembly is installed, such as computer 24 of FIG. 1.

At 72 of method 70, the relative air-mass flow velocity, or wind velocity relative to the aircraft, is sensed. In aeronautics, the term 'relative wind velocity' is a surrogate for the velocity of an aircraft relative to the air mass in which the aircraft is flying. As the relative wind velocity is a vector in three dimensions, the relative wind velocity admits of a projection in the horizontal plane (i.e., the plane perpendicular to the altitude component). In some examples herein, the term 'relative wind velocity' is used to refer to that projection, which excludes the altitude component. In some examples, the relative wind velocity may be sensed via an air-speed sensor arranged in the aircraft. In other examples, the relative wind velocity may be sensed indirectly, based on GPS, accelerometer, and/or other data. As described below, the onboard computer of the aircraft may receive the relative wind velocity as input and compute a setpoint for the differential phase angle *φ* based on the relative wind velocity. In that manner, the setpoint for the differential phase angle may vary in response to the relative wind velocity.

At 74 of method 70, if the relative wind velocity is below a predetermined threshold, then, at 76, the differential phase angle is set to substantially 180 / *N* degrees, where *N* is the number of rotors in the rotor assembly. In other words, the setpoint for the differential phase angle may be about 180 / N degrees for limiting low values of the relative wind velocity. The limiting low values may correspond to vertical takeoff or landing conditions, for instance, or any portion thereof. In examples where two rotors are arranged in the rotor assembly, the differential phase angle may be set to substantially 90 degrees under such conditions.

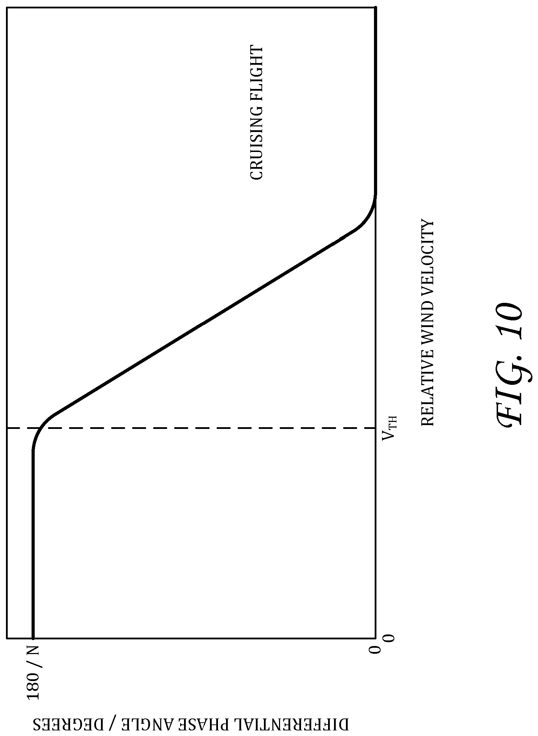

At 78 of method 70, the differential phase angle is decreased with increasing relative wind velocity. In some examples, the onboard computer of the aircraft receives the relative wind velocity sensed at 72 and adjusts the setpoint for the differential phase angle downward with increasing relative wind velocity. In some examples the setpoint collapses to substantially zero degrees as the aircraft approaches a relative wind velocity indicative of cruising flight. Thus, the differential phase angle may be set to 0 degrees during cruising flight or any portion thereof. FIG. 10 shows a graph of differential phase angle as a function of the relative wind velocity in one, nonlimiting example.

At 80 of method 70, the altitude of the aircraft is sensed. In some examples, the altitude may be sensed via an altimeter arranged in the aircraft. In other examples, the altitude may be sensed indirectly, based on GPS and/or other data. At 82 the differential phase angle is varied as a function of the altitude. In some examples, the onboard computer may adjust the setpoint of the differential phase angle in response to the altitude. In some examples, the setpoint of the differential phase angle may be adjusted in response to the altitude indicative of cruising flight or to a change in flight mode (vertical to cruising transition, for instance). This control feature may be enacted, for instance, to compensate for ground-wash effects-where objects and/or structures in the wake of a rotor assembly may affect the differential phase angle desired to reduce acoustic emission while maintaining thrust.

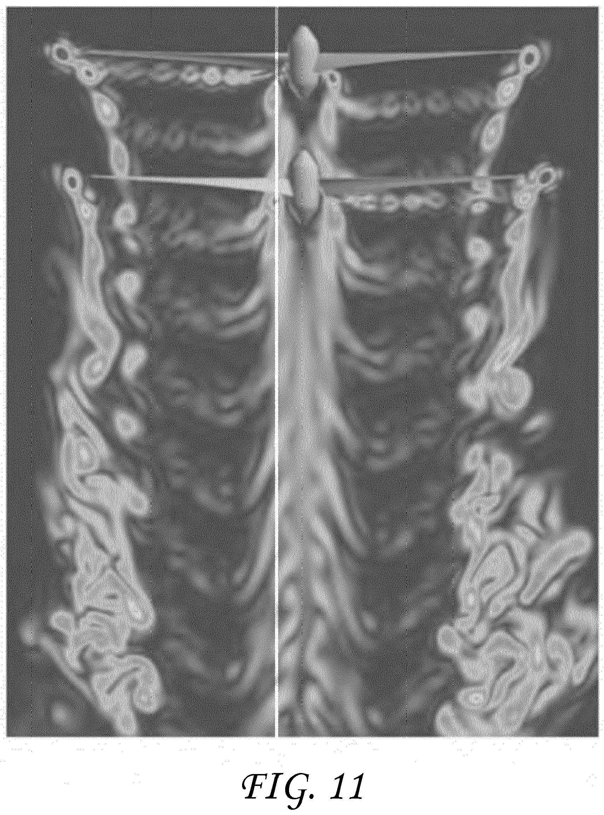

At optional step 84, acoustic noise from the aircraft is sensed. In some examples the acoustic noise may be sensed via a directional or omnidirectional microphone arranged onboard the aircraft. In some scenarios, the noise of particular interest is noise caused by injection of the vortex of an upstream rotor blade of a rotor assembly by a downstream rotor blade of the same rotor assembly. FIG. 11 provides an illustration of that scenario.

At 86 of method 70, the differential phase angle is varied so as to reduce the amount of acoustic noise. More specifically, the onboard computer of the aircraft may vary the setpoint of the differential phase angle in an open- or closed-loop manner so as to reduce the amount of acoustic noise from the aircraft, including noise due to vortex ingestion. In some examples, the onboard computer may receive input from an onboard microphone and adjust the setpoint in a closed-loop manner so as to reduce the amount noise. In other examples, the computer may adjust the setpoint in an open-loop manner based on one or more sensed or predicted parameter values. Suitable parameter values include rotational velocity of the rotors, aircraft altitude, relative wind velocity, *etc.* In some examples, the computer may compute the setpoint as a numerical function. In other examples, the computer may read the setpoint from a look-up table stored in computer memory.

At 88 of method 70, it is determined whether aircraft has achieved cruising flight, where the rotational velocity of the rotors of the rotor assembly is reduced to a powered-down state. At 90, if the rotor assembly is powered down for cruising flight then each blade in the rotor assembly is stationed *(i.e.,* stopped) and statically aligned to the relative wind direction. As used herein, the 'relative wind direction' is the direction parallel to the horizontal projection of the relative wind velocity. In some examples, the computer receives the relative wind direction (as described above) and adjusts the setpoint for the static orientation of the blades of all rotors of the rotor assembly to the relative wind direction. As shown in FIG. 9, step 90 may be repeated indefinitely during cruising flight whenever there is a change in the relative wind direction (e.g., when the wind changes and/or the aircraft changes course). Accordingly, the computer may be configured to iteratively or continuously receive a change in the relative wind direction during cruising flight and update the setpoint accordingly. In some examples, where a simplified control strategy is desired, the blades may be aligned in the forward direction of the aircraft, irrespective of the relative wind direction, during cruising flight.

As noted above, the control methods herein may be tied to a computer system of one or more computing devices, such as onboard computer 24. Such methods and processes may be implemented as an application program or service, an application programming interface (API), a library, and/or other computer-program product.

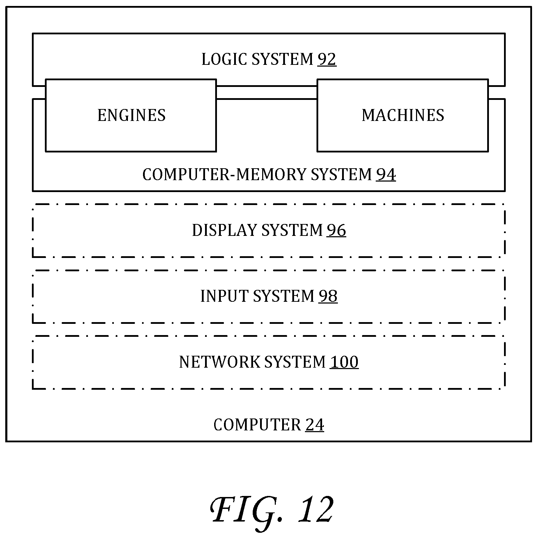

FIG. 12 provides a schematic representation of an example computer 24 configured to provide some or all of the computer system functionality disclosed herein. Computer 24 may take the form of a personal computer, application-server computer, or any other computing device.

Computer 24 includes a logic system 92 and a computer-memory system 94. Computer 24 may optionally include a display system 96, an input system 98, a network system 100, and/or other systems not shown in the drawings.

Logic system 92 includes one or more physical devices configured to execute instructions. For example, the logic system may be configured to execute instructions that are part of at least one operating system (OS), application, service, and/or other program construct. The logic system may include at least one hardware processor *(e.g.,* microprocessor, central processor, central processing unit (CPU) and/or graphics processing unit (GPU)) configured to execute software instructions. Additionally or alternatively, the logic system may include at least one hardware or firmware device configured to execute hardware or firmware instructions. A processor of the logic system may be single-core or multi-core, and the instructions executed thereon may be configured for sequential, parallel, and/or distributed processing. Individual components of the logic system optionally may be distributed among two or more separate devices, which may be remotely located and/or configured for coordinated processing. Aspects of the logic system may be virtualized and executed by remotely-accessible, networked computing devices configured in a cloud-computing configuration.

Computer-memory system 94 includes at least one physical device configured to temporarily and/or permanently hold computer system information, such as data and instructions executable by logic system 92. When the computer-memory system includes two or more devices, the devices may be collocated or remotely located. Computer-memory system 94 may include at least one volatile, nonvolatile, dynamic, static, read/write, read-only, random-access, sequential-access, location-addressable, file-addressable, and/or content-addressable computer-memory device. Computer-memory system 94 may include at least one removable and/or built-in computer-memory device. When the logic system executes instructions, the state of computer-memory system 94 may be transformed-e.g., to hold different data.

Aspects of logic system 92 and computer-memory system 94 may be integrated together into one or more hardware-logic components. Any such hardware-logic component may include at least one program- or application-specific integrated circuit (PASIC / ASIC), program- or application-specific standard product (PSSP / ASSP), system-on-a-chip (SOC), or complex programmable logic device (CPLD), for example.

Logic system 92 and computer-memory system 94 may cooperate to instantiate one or more logic machines or engines. As used herein, the terms 'machine' and 'engine' each refer collectively to a combination of cooperating hardware, firmware, software, instructions, and/or any other components that provide computer system functionality. In other words, machines and engines are never abstract ideas and always have a tangible form. A machine or engine may be instantiated by a single computing device, or a machine or engine may include two or more subcomponents instantiated by two or more different computing devices. In some implementations, a machine or engine includes a local component (e.g., a software application executed by a computer system processor) cooperating with a remote component (e.g., a cloud computing service provided by a network of one or more server computer systems). The software and/or other instructions that give a particular machine or engine its functionality may optionally be saved as one or more unexecuted modules on one or more computer-memory devices.

Machines and engines may be implemented using any suitable combination of machine learning (ML) and artificial intelligence (AI) techniques. Non-limiting examples of techniques that may be incorporated in an implementation of one or more machines include support vector machines, multi-layer neural networks, convolutional neural networks (e.g., spatial convolutional networks for processing images and/or video, and/or any other suitable convolutional neural network configured to convolve and pool features across one or more temporal and/or spatial dimensions), recurrent neural networks (e.g., long short-term memory networks), associative memories (e.g., lookup tables, hash tables, bloom filters, neural Turing machines and/or neural random-access memory) unsupervised spatial and/or clustering methods (e.g., nearest neighbor algorithms, topological data analysis, and/or k-means clustering), and/or graphical models (e.g., (hidden) Markov models, Markov random fields, (hidden) conditional random fields, and/or AI knowledge bases)).

When included, display system 96 may be used to present a visual representation of data held by computer-memory system 94. The visual representation may take the form of a graphical user interface (GUI) in some examples. The display system may include one or more display devices utilizing virtually any type of technology. In some examples, display system may include one or more virtual-, augmented-, or mixed reality displays. In some examples, the display system may be remote from computer 24 and coupled operatively to computer 24 via network system 100.

When included, input system 98 may comprise or interface with one or more input devices. An input device may include a sensor device or a user input device. Examples of user input devices include a keyboard, mouse, or touch screen. In some examples, the input system may be remote from computer 24 and coupled operatively to computer 24 via network system 100.

When included, network system 100 may be configured to communicatively couple computer 24 with one or more other computer systems. The network system may include wired and wireless communication devices compatible with one or more different communication protocols. The network system may be configured for communication via personal-, local- and/or wide-area networks.

It will be understood that the configurations and/or approaches described herein are exemplary in nature, and that these specific embodiments or examples are not to be considered in a limiting sense, because numerous variations are possible. The specific routines or processes described herein may represent one or more of any number of processing strategies. As such, various acts illustrated and/or described may be performed in the sequence illustrated and/or described, in other sequences, in parallel, or omitted. Likewise, the order of the above-described processes may be changed, the invention being defined exclusively by the appended claims.

## Claims

1. An aircraft rotor assembly (12), comprising:
first and second rotors (42A, 42B) rotatable about a common axis (A) synchronously and with respect to each other, the first rotor having a first blade (44A) extending radially from the common axis, the second rotor having a second blade (44B) extending radially from the common axis, longitudinally offset from the first blade along the common axis;
a drive assembly (46) coupled to the first and second rotors and configured to controllably vary, during continuous rotation of the first and second rotors, a differential phase angle (ϕ) separating the first and second blades as projected onto a plane (P_{A}, P_{B}) perpendicular to the common axis, wherein the drive assembly includes first and second motors (48A, 48B) coupled, respectively, to the first and second rotors; and
a plurality of rotation angle sensors (56) configured to sense an absolute rotation angle of the first and second rotors, wherein the drive assembly includes an electronic motor controller (54) configured to receive feedback signals from the plurality of rotation angle sensors (56), and
**characterised in that** when, in use, an absolute rotation angle is sensed for a given rotor, the electronic motor controller (54) is configured to station the given rotor within a desired angular interval by closed-loop control of the absolute rotation angle, by applying impulses of forward and reverse torque iteratively.

2. The rotor assembly of claim 1, wherein the first rotor includes a third blade (44A') extending radially from the common axis, 180 degrees separated from the first blade, and wherein the second rotor includes a fourth blade (44B') extending radially from the common axis, 180 degrees separated from the second blade.

3. The rotor assembly of claim 1 or 2, wherein the first and second rotors are among three or more rotors each coupled to a corresponding motor of the drive assembly.

4. The rotor assembly of claim 3, further comprising a first shaft (50A) coupling the first motor to the first rotor and a second shaft (50B) coupling the second motor to the second rotor, wherein the first and second shafts are concentric.

5. The rotor assembly of claim 3 or 4, wherein the first and second motors are adjacent along the common axis, such that the first and second blades are arranged at one side of the rotor assembly and the first and second motors are arranged at an opposite side of the rotor assembly.

6. The rotor assembly of any of claims 3-5, further comprising a mechanical interlock (66) configured to couple the first motor to the second rotor when the differential phase angle reaches a predetermined value.

7. The rotor assembly of any preceding claim, wherein the first and second blades are non-folding, fixed-pitch blades and/or wherein the first and second blades differ in length.

8. The rotor assembly of claim 2, or any previous claim when dependent on claim 2, wherein the first blade and the third blade are a first pair of blades (44A, 44A'), and the second blade and the fourth blade are a second pair of blades (44B, 44B') longitudinally offset from the first pair of blades along the common axis,
wherein the differential phase angle (ϕ) separates the first pair of blades and the second pair of blades, such that the differential phase angle is substantially 180 / N degrees during takeoff and landing of the aircraft, and the differential phase angle is substantially 0 degrees during cruising flight of the aircraft, where N is a number of rotors in the rotor assembly.

9. The rotor assembly of claim 8, further comprising a mechanical interlock (66) configured to limit the differential phase angle, thereby allowing the first motor to rotate the second rotor or the second motor to rotate the first rotor.

10. The rotor assembly of claims 8 or 9, wherein the number of rotors in the rotor assembly is two, and wherein the differential phase angle is substantially 90 degrees during takeoff and landing.

11. An aircraft (10), comprising:
a forward thruster (20); and
at least one rotor assembly according to claims 8-10.

12. The aircraft of claim 11, further comprising an altimeter (30), wherein the differential phase angle is controllably varied in response to output of the altimeter.

13. The aircraft of any of claims 11-12, wherein the drive assembly is further configured to station and statically align the first pair of blades and the second pair of blades to a wind direction relative to the aircraft during cruising flight of the aircraft; and/or wherein the rotor assembly and the forward thruster have a fixed relative orientation.

## Patentansprüche

1. Flugzeugrotoranordnung (12), die Folgendes umfasst:
einen ersten und zweiten Rotor (42A, 42B), die synchron und zueinander um eine gemeinsame Achse (A) drehbar sind, wobei der erste Rotor ein erstes Blatt (44A) aufweist, das sich radial von der gemeinsamen Achse erstreckt, wobei der zweite Rotor ein zweites Blatt (44B) aufweist, das sich radial von der gemeinsamen Achse erstreckt und in Längsrichtung von dem ersten Blatt entlang der gemeinsamen Achse versetzt ist;
eine Antriebsanordnung (46), die mit dem ersten und zweiten Rotor gekoppelt und dazu ausgelegt ist, während einer kontinuierlichen Drehung des ersten und zweiten Rotors einen differenziellen Phasenwinkel (φ), der das erste und zweite Blatt trennt, wie auf eine Ebene (P_{A}, P_{B}) senkrecht zur gemeinsamen Achse projiziert, steuerbar zu variieren, wobei die Antriebsanordnung einen ersten und zweiten Motor (48A, 48B) aufweist, die mit dem ersten bzw. zweiten Rotor gekoppelt sind; und
mehrere Drehwinkelsensoren (56), die dazu ausgelegt sind, einen absoluten Drehwinkel des ersten und des zweiten Rotors zu erfassen, wobei die Antriebsanordnung eine elektronische Motorsteuerung (54) aufweist, die dazu ausgelegt ist, Rückkopplungssignale von den mehreren Drehwinkelsensoren (56) zu empfangen, und
**dadurch gekennzeichnet, dass** bei der Verwendung
ein absoluter Drehwinkel für einen gegebenen Rotor erfasst wird, die elektronische Motorsteuerung (54) dazu ausgelegt ist, den gegebenen Rotor innerhalb eines gewünschten Winkelintervalls durch Regelung des absoluten Drehwinkels zu positionieren, indem Impulse von Vorwärts- und Rückwärtsdrehmoment iterativ angelegt werden.

2. Rotoranordnung nach Anspruch 1, wobei der erste Rotor ein drittes Blatt (44A') aufweist, das sich radial von der gemeinsamen Achse erstreckt und 180 Grad vom ersten Blatt getrennt ist, und wobei der zweite Rotor ein viertes Blatt (44B') aufweist, das sich radial von der gemeinsamen Achse erstreckt und 180 Grad vom zweiten Blatt getrennt ist.

3. Rotoranordnung nach Anspruch 1 oder 2, wobei der erste und zweite Rotor zu drei oder mehreren Rotoren gehören, die jeweils mit einem entsprechenden Motor der Antriebsanordnung gekoppelt sind.

4. Rotoranordnung nach Anspruch 3, ferner umfassend eine erste Welle (50A), die den ersten Motor mit dem ersten Rotor koppelt, und eine zweite Welle (50B), die den zweiten Motor mit dem zweiten Rotor koppelt, wobei die erste und zweite Welle konzentrisch sind.

5. Rotoranordnung nach Anspruch 3 oder 4, wobei der erste und zweite Motor entlang der gemeinsamen Achse benachbart sind, so dass das erste und zweite Blatt an einer Seite der Rotoranordnung angeordnet sind und der erste und zweite Motor an einer gegenüberliegenden Seite der Rotoranordnung angeordnet sind.

6. Rotoranordnung nach einem der Ansprüche 3-5, ferner umfassend eine mechanische Verriegelung (66), die dazu ausgelegt ist, den ersten Motor mit dem zweiten Rotor zu koppeln, wenn der differenzielle Phasenwinkel einen vorbestimmten Wert erreicht.

7. Rotoranordnung nach einem der vorhergehenden Ansprüche, wobei das erste und zweite Blatt nicht faltbare, feste Blätter sind und/oder wobei sich das erste und zweite Blatt in ihrer Länge unterscheiden.

8. Rotoranordnung nach Anspruch 2 oder einem vorhergehenden Anspruch, wenn abhängig von Anspruch 2, wobei das erste Blatt und das dritte Blatt ein erstes Paar Blätter (44A, 44A') ist und das zweite Blatt und das vierte Blatt ein zweites Paar Blätter (44B, 44B') ist, das in Längsrichtung von dem ersten Paar Blätter entlang der gemeinsamen Achse versetzt ist,
wobei der differenzielle Phasenwinkel (φ) das erste Paar Blätter und das zweite Paar Blätter trennt, so dass der differentielle Phasenwinkel während des Startens und Landens des Luftfahrzeugs im Wesentlichen 180 / N Grad beträgt und der differentielle Phasenwinkel während des Reiseflugs des Luftfahrzeugs im Wesentlichen 0 Grad beträgt, wobei N eine Anzahl von Rotoren in der Rotoranordnung ist.

9. Rotoranordnung nach Anspruch 8, die ferner eine mechanische Verriegelung (66) umfasst, die dazu ausgelegt ist, den differenziellen Phasenwinkel zu begrenzen, wodurch es dem ersten Motor ermöglicht wird, den zweiten Rotor zu drehen, oder dem zweiten Motor ermöglicht wird, den ersten Rotor zu drehen.

10. Rotoranordnung nach Anspruch 8 oder 9, wobei die Anzahl der Rotoren in der Rotoranordnung zwei beträgt und wobei der differenzielle Phasenwinkel während des Startens und Landens im Wesentlichen 90 Grad beträgt.

11. Luftfahrzeug (10), das Folgendes umfasst:
ein vorderer Triebwerk (20) und
mindestens eine Rotoranordnung nach den Ansprüchen 8-10.

12. Luftfahrzeug nach Anspruch 11, das ferner einen Höhenmesser (30) umfasst, wobei der differenzielle Phasenwinkel als Reaktion auf die Ausgabe des Höhenmessers steuerbar variiert wird.

13. Luftfahrzeug nach einem der Ansprüche 11-12, wobei die Antriebsanordnung ferner dazu ausgelegt ist, das erste Paar Blätter und das zweite Paar Blätter während des Reiseflugs des Luftfahrzeugs zu stationieren und statisch auf eine Windrichtung relativ zum Luftfahrzeug auszurichten; und/oder wobei die Rotoranordnung und das vordere Triebwerk eine feste relative Ausrichtung aufweisen.

## Revendications

1. Ensemble (12) de rotors d'aéronef, comprenant :
des premier et deuxième rotors (42A, 42B) rotatifs autour d'un axe commun (A) de manière synchrone et l'un par rapport à l'autre, le premier rotor possédant une première pale (44A) s'étendant radialement depuis l'axe commun, le deuxième rotor possédant une deuxième pale (44B) s'étendant radialement depuis l'axe commun, décalée longitudinalement par rapport à la première pale le long de l'axe commun ;
un ensemble d'entraînement (46) couplé aux premier et deuxième rotors et configuré pour faire varier de manière commandée, pendant la rotation continue des premier et deuxième rotors, un angle de phase différentiel (φ) séparant les première et deuxième pales telles que projetées sur un plan (P_{A}, P_{B}) perpendiculaire à l'axe commun, l'ensemble d'entraînement comportant des premier et deuxième moteurs (48A, 48B) couplés, respectivement, aux premier et deuxième rotors ; et
une pluralité de capteurs d'angle de rotation (56) configurés pour détecter un angle de rotation absolu des premier et deuxième rotors, l'ensemble d'entraînement comportant un contrôleur de moteurs électronique (54) configuré pour recevoir des signaux de rétroaction provenant de la pluralité de capteurs d'angle de rotation (56), et
**caractérisé en ce que**, lors de l'utilisation,
un angle de rotation absolu est détecté pour un rotor donné, le contrôleur de moteurs électronique (54) est configuré pour positionner le rotor donné au sein d'un intervalle angulaire souhaité par commande en boucle fermée de l'angle de rotation absolu, en appliquant de manière itérative des impulsions de couple direct et inverse.

2. Ensemble de rotors selon la revendication 1, dans lequel le premier rotor comporte une troisième pale (44A') s'étendant radialement depuis l'axe commun, séparée de 180 degrés de la première pale, et dans lequel le deuxième rotor comporte une quatrième pale (44B') s'étendant radialement depuis l'axe commun, séparée de 180 degrés de la deuxième pale.

3. Ensemble de rotors selon la revendication 1 ou 2, dans lequel les premier et deuxième rotors font partie d'au moins trois rotors, couplés chacun à un moteur correspondant de l'ensemble d'entraînement.

4. Ensemble de rotors selon la revendication 3, comprenant en outre un premier arbre (50A) couplant le premier moteur au premier rotor et un deuxième arbre (50B) couplant le deuxième moteur au deuxième rotor, les premier et deuxième arbres étant concentriques.

5. Ensemble de rotors selon la revendication 3 ou 4, dans lequel les premier et deuxième moteurs sont adjacents le long de l'axe commun, de sorte que les première et deuxième pales sont agencées d'un côté de l'ensemble de rotors et que les premier et deuxième moteurs sont agencés d'un côté opposé de l'ensemble de rotors.

6. Ensemble de rotors selon l'une quelconque des revendications 3 à 5, comprenant en outre un interverrouillage mécanique (66) configuré pour coupler le premier moteur au deuxième rotor lorsque l'angle de phase différentiel atteint une valeur prédéterminée.

7. Ensemble de rotors selon l'une quelconque des revendications précédentes, dans lequel les première et deuxième pales sont des pales non repliables à pas fixe et/ou dans lequel les première et deuxième pales diffèrent en longueur.

8. Ensemble de rotors selon la revendication 2, ou l'une quelconque des revendications précédentes lorsqu'elle dépend de la revendication 2, dans lequel la première pale et la troisième pale constituent une première paire de pales (44A, 44A'), et la deuxième pale et la quatrième pale constituent une deuxième paire de pales (44B, 44B') décalées longitudinalement par rapport à la première paire de pales le long de l'axe commun. dans lequel l'angle de phase différentiel (φ) sépare la première paire de pales et la deuxième paire de pales, de sorte que l'angle de phase différentiel est sensiblement de 180 / N degrés pendant le décollage et l'atterrissage de l'aéronef, et que l'angle de phase différentiel est sensiblement de 0 degré pendant le vol de croisière de l'aéronef, N étant un nombre de rotors dans l'ensemble de rotors.

9. Ensemble de rotors selon la revendication 8, comprenant en outre un interverrouillage mécanique (66) configuré pour limiter l'angle de phase différentiel, pour ainsi permettre au premier moteur de faire tourner le deuxième rotor ou au deuxième moteur de faire tourner le premier rotor.

10. Ensemble de rotors selon la revendication 8 ou 9, dans lequel le nombre de rotors dans l'ensemble de rotors est de deux, et dans lequel l'angle de phase différentiel est sensiblement de 90 degrés pendant le décollage et l'atterrissage.

11. Aéronef (10), comprenant :
un propulseur avant (20) ; et
au moins un ensemble de rotors selon les revendications 8 à 10.

12. Aéronef selon la revendication 11, comprenant en outre un altimètre (30), l'angle de phase différentiel étant varié de manière commandée en réponse à la sortie de l'altimètre.

13. Aéronef selon l'une quelconque des revendications 11 à 12, dans lequel l'ensemble d'entraînement est configuré en outre pour positionner et aligner statiquement la première paire de pales et la deuxième paire de pales par rapport à une direction du vent relativement à l'aéronef pendant le vol de croisière de l'aéronef ; et/ou dans lequel l'ensemble de rotors et le propulseur avant présentent une orientation relative fixe.
